# EUROPEAN PATENT SPECIFICATION

(11) **EP 4 529 284 B1**
(45) Date of publication and mention of the grant of the patent: **25.11.2026**
(21) Application number: 22942715.8
(22) Date of filing: 19.05.2022
(51) Int. Cl.: H04W 52/02, H04W 48/08

(54) **NETWORK NODE AND COMMUNICATION METHOD**
NETZWERKKNOTEN UND KOMMUNIKATIONSVERFAHREN
NOEUD DE RÉSEAU ET PROCÉDÉ DE COMMUNICATION

(43) Date of publication of application: 26.03.2025
(73) Proprietor: NTT DOCOMO, INC., Tokyo 100-6150 (JP)
(72) Inventor: MINOKUCHI, Atsushi, Tokyo 100-6150 (JP); SAMA, Malla Reddy, 80687 Munich (DE)
(74) Representative: Hoffmann Eitle
(86) International application number: PCT/JP2022/020870
(87) International publication number: WO 2023/223511

(56) References cited:
- WO-A1-2021/032501
- WO-A1-2022/058049
- WO-A1-2022/167836
- JP-A- 2022 506 176

## Description

### FIELD OF THE INVENTION

The present invention relates to a network node, a communication system and a communication method.

### BACKGROUND OF THE INVENTION

In NR (New Radio) (also referred to as "5G") that is a successor system of LTE (Long Term Evolution), a network architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (for example, Non-Patent Document 1: 3GPP TS 23.501 V17.2.0 (2021-09), and Non-Patent Document 2: 3GPP TS 23.502 V17.2.1 (2021-09)).

In addition, with respect to the future systems such as 6G, one of the main themes includes sustainable energy and reduction of CO₂ emissions. With respect to all aspects of the 6G network design, reduction of energy consumption and indication/reduction of CFP (Carbon Footprint of Products) are required to be considered.

WO 2022/058049 A1 describes a method for reducing the energy consumed by a mobile network by means of Network Function discovery and selection based on energy efficiency information. The method includes receiving energy efficiency information of a network entity at a network repository entity from a network data analytics entity and performing the discovery and selection of the network entity at the network repository entity based on the energy efficiency information. The energy efficiency information may be determined based on energy consumption information, computing resources usage information and/or the number of users of the network entity. The network data analytics entity may be a Network Data Analytics Function, NWDAF. The network repository entity may be a Network Repository Function, NRF. The network entity may be any Network Function or Network Function Service.

JP 2022 506176 A describes a service proxy controller and multiple service proxy workers. The service proxy controller is configured to provide routing policies for the telecommunications network core. The telecommunications network core includes network functions that communicate using a service-based architecture. Each service proxy worker is configured to route telecommunications network core messages between different subsets of network functions by utilizing and enforcing routing policies from the service proxy controller. Each service proxy worker is configured to provide network status reports to the service proxy controller based on telecommunications network core messages.

### SUMMARY OF THE INVENTION

### TECHNICAL PROBLEM

The NF (Network Function) selection in the conventional network has been performed based on the NF load, DNN, S-NSSAI, user location information, and the like, and the energy consumption and CFP cannot be taken into account. In addition, an NF only selects the destination NF and whether or not the destination NF can appropriately select the next destination NF next to the destination NF cannot be taken into account. Therefore, there is a problem that the NF selection cannot be performed by taking into account the overall energy consumption or CFP including a plurality of NFs related to the service provision in the conventional technology.

The present invention has been made in view of the foregoing and is intended to achieve an appropriate NF selection by taking into account the energy consumption.

### SOLUTION TO PROBLEM

According to an aspect of the present invention, there is provided a network node as set out in Claim 1.

According to another aspect of the present invention, there is provided a communication system as set out in Claim 3.

According to another aspect of the present invention, there is provided a communication method as set out in Claim 4.

### ADVANTAGEOUS EFFECTS OF INVENTION

According to the disclosed technique, a technology is provided that enables to achieve an appropriate NF selection by taking into account the energy consumption.

### BRIEF DESCRIPTION OF THE DRAWINGS

[Fig. 1] is a drawing for describing a wireless communication system related to an embodiment of the present invention.
[Fig. 2] is a drawing illustrating a configuration example of a wireless communication system related to an embodiment of the present invention.
[Fig. 3] is a sequence diagram illustrating an example of a flow of an NF selection procedure related to an embodiment of the present invention.
[Fig. 4] is a sequence diagram illustrating an example of a flow of a billing information writing procedure related to an embodiment of the present invention.
[Fig. 5] is a sequence diagram illustrating an example of a flow of a subscriber itemized statement generation procedure related to an embodiment of the present invention.
[Fig. 6] is a drawing illustrating a configuration example of a wireless communication system related to a modified embodiment of the present invention.
[Fig. 7] is a sequence diagram illustrating an example of a flow of a billing information writing procedure related to a modified embodiment of the present invention.
[Fig. 8] is a drawing illustrating an example of a functional structure of a base station related to an embodiment of the present invention.
[Fig. 9] is a drawing illustrating an example of a functional structure of a terminal related to an embodiment of the present invention.
[Fig. 10] is a drawing illustrating an example of a hardware structure of the base station or the terminal related to an embodiment of the present invention.
[Fig. 11] is a drawing illustrating an example of a structure of a vehicle related to an embodiment of the present invention.

### DETAILED DESCRIPTION OF THE PREFERRED EMBODIMENTS

There is disclosed herein a network node that includes: a reception unit configured to receive a request for transmitting information for discovering a network node that provides a service from another network node; and a transmission unit configured to transmit, to the another network node, information indicating a candidate network node that provides the service based on an energy consumption rate, an energy saving state, or a load of each of network nodes.

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

### (Overview of embodiment)

Next, an overview of an embodiment of the present invention will be described. The destination NF selection is performed by taking into account the NF energy consumption, NF load, energy saving state, and the like, and by taking into account NFs that can be selected by the destination NF. According to the above operation, the NF selection aiming at the overall optimization with respect to the energy consumption will be achieved. In addition, the reduction of energy consumption will be motivated by reflecting the total energy required for service provision onto the subscriber itemized statement by using the billing information.

### (System configuration)

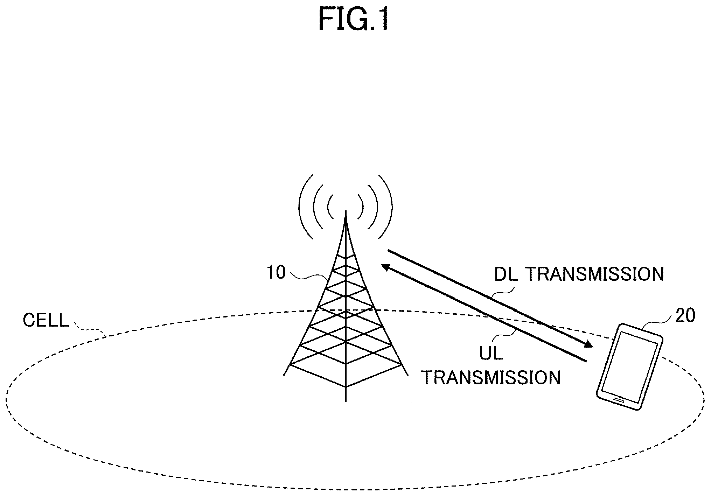

Fig. 1 is a drawing illustrating a wireless communication system related to an embodiment of the present invention. As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

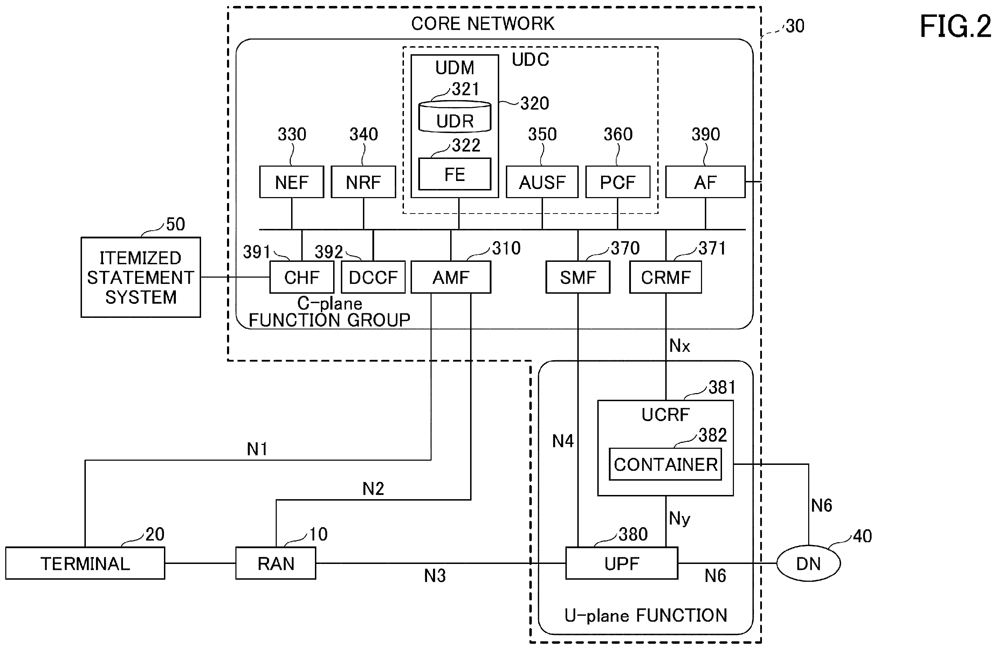

Fig. 2 is a drawing illustrating a configuration example of a wireless communication system related to an embodiment of the present invention. The wireless communication system includes a RAN 10, a terminal 20, a core network 30, a DN (Data Network) 40, and an itemized statement system 50.

The core network 30 is a network including an exchange, a subscriber information management device, and the like. The core network 30 includes a network node that supports a U-Plane function, and a network node group that supports a C-Plane function group.

The U-Plane function is a function of performing processing of transmission and reception of user data. The network node that provides the U-Plane function is a UPF (User plane function) 380, for example. The UPF 380 is a network node that has functions of: an external PDU (Protocol Data Unit) session point for the interconnection with the DN 40; packet routing and forwarding; user plane QoS (Quality of Service) handling; and the like. The UPF 380 controls transmission and reception of data between the DN 40 and the terminal 20. The UPF 380 and the DN 40 may include one or more network slices.

The C-Plane function group is a function group that performs a series of control processes for communication establishment, etc. The network node group that supports the C-Plane function group includes an AMF (Access and Mobility Management Function) 310, a UDM (Unified Data Management) 320, an NEF (Network Exposure Function) 330, an NRF (Network Repository Function) 340, an AUSF (Authentication Server Function) 350, a PCF (Policy Control Function) 360, an SMF (Session Management Function) 370, and an AF (Application Function) 390, for example.

The AMF 310 is a network node having functions of terminating the RAN interface, terminating the NAS (Non-Access Stratum), managing registration, managing connection, managing reachability, managing mobility, and the like. The NRF 340 is a network node having a function of discovering NF (Network Function) instances that provide services. The UDM 320 is a network node that manages subscriber data and authentication data. The UDM 320 includes a UDR (User Data Repository) 321 that stores the above-described data and an FE (Front End) 322. The FE 322 processes subscriber information.

The SMF 370 is a network node having functions such as session management, IP (Internet Protocol) address assignment and management for terminals 20, a DHCP (Dynamic Host Configuration Protocol) function, an ARP (Address Resolution Protocol) proxy, a roaming function, and the like. The NEF 330 is a network node having a function of indicating capabilities and events to other NFs (Network Functions). The PCF 360 is a network node having a function of performing policy control of the network.

The AF (Application Function) 390 is a network node having a function of controlling the application server.

The CHF (Charging Function) 391 is a network node that determines the billing amount and the itemized statement for subscribers and requests the itemized statement system 50 to generate the subscriber itemized statement.

The DCCF (Data Collection Coordination Function) 392 is a network node that coordinates data collection from one or more NFs based on the data collection request from an NF.

The AMF 310 is connected to, and capable of communicating with, the RAN 10 via the N2 link. In addition, the UPF 380 is connected to, and capable of communicating with, the RAN 10 via the N3 link. The UPF 380 is connected to, and capable of communicating with, the SMF 370 via the N4 link. The UPF 380 is connected to, and capable of communicating with, the DN 40 via the N6 link.

Furthermore, the core network 30 related to an embodiment of the present invention may further include the CRMF (Computing Resource Management Function) 371 and the UCRF (User Computing Resource Function) 381 in addition to the above-described conventional configuration.

The UCRF 381 is a function of providing the computing resource that can be used by a user (subscriber) (hereinafter, also referred to as a user computing resource function). Hereinafter, the computing resource is also referred to as a container. It is to be noted that the computing resource may include the execution environment for executing various applications that are installed in the computing resource. In other words, the UCRF 381 includes one or a plurality of containers 382. The UCRF 381 is included in the U-Plane function. The UCRF 381 is connected to, and capable of communicating with, the UPF 380 via the Ny link. In addition, the UCRF 381 is connected to, and capable of communicating with, the DN 40 via the N6 link.

The CRMF 371 is a function of managing the computing resource (hereinafter, also referred to as a computing resource management function). The CRMF 371 is included in the C-Plane function group. The CRMF 371 is connected to, and capable of communicating with, other network nodes included in the C-Plane function group.

The CRMF 371 is connected to, and capable of communicating with, the UCRF 381 via the Nx link. It is to be noted that the names of the Nx link and the Ny link are examples and may be referred to by other names.

### (Operation of wireless communication system)

Next, an operation of a wireless communication system related to an embodiment of the present will be described.

As a premise of describing the operation, the following information elements are defined as information elements corresponding to the NF type in the NF profile. In a case of NFs of the C-Plane function group, if the NF is an AMF 310, an AMF energy consumption rate [joules/message] is defined. Similarly, an SMF energy consumption rate [joules/message] or a PCF energy consumption rate [joules/message] is defined for an SMF 370, a PCF 360, or the like.

In addition, in a case of NFs of the U-Plane function (currently, only UPF 380), a UPF energy consumption rate [joules/bit] is defined.

In a case of TN (Transport Network), an NF profile is newly defined for TNs arranged on N3, N9, and N6. It is to be noted that each NF can discover a TN by using the NRF 340. A TN energy consumption rate [joules/bit] is defined as an information element in this profile.

In a case of a user computing function, a UCRF energy consumption rate [joules/floating-point arithmetic] is defined for a UCRF 381. An NF profile is newly defined for MEC (Multi-Access Edge Computing) on N6. It is assumed that each NF can discover MEC by using the NRF 340. A MEC energy consumption rate [joules/floating-point arithmetic] is defined as an information element in this profile.

It is to be noted that these energy consumption rates may vary depending on the service type (for example, eMBB (enhanced Mobile Broadband), URLLC (Ultra-Reliable and Low Latency Communications), or the like). A CFP rate [CO₂ emission amount/message, CO₂ emission amount/bit, or CO₂ emission amount/floating-point arithmetic] may be used instead of these energy consumption rates.

In addition, the following is further defined in the NF profile.
- Energy saving state (true, false)

The following is defined for input parameters of the NF discovery service provided by the NRF 340.
- Environment conscious level (low/middle/high)
- Concatenated discovery request (specifying an NF type to be discovered next to the next) (it is to be noted that the number of concatenations may be a plural number).

Next, NF registration to the NRF 340 will be described. An NF energy consumption rate is determined by OAM at the time of NF generation and the NF energy consumption rate is configured by OAM for the NF. An NF configures an energy consumption rate in the NF profile of the NF itself at the time of registration to the NRF 340.

Alternatively, the NF may perform registration to the NRF 340 in the conventional way. In this case, OAM additionally configures the energy consumption rate to the NF profile that has already been registered.

The NF or OAM updates the NF profile when entering the energy saving state or when releasing the energy saving state.

Next, an NF selection procedure by the NF will be described.

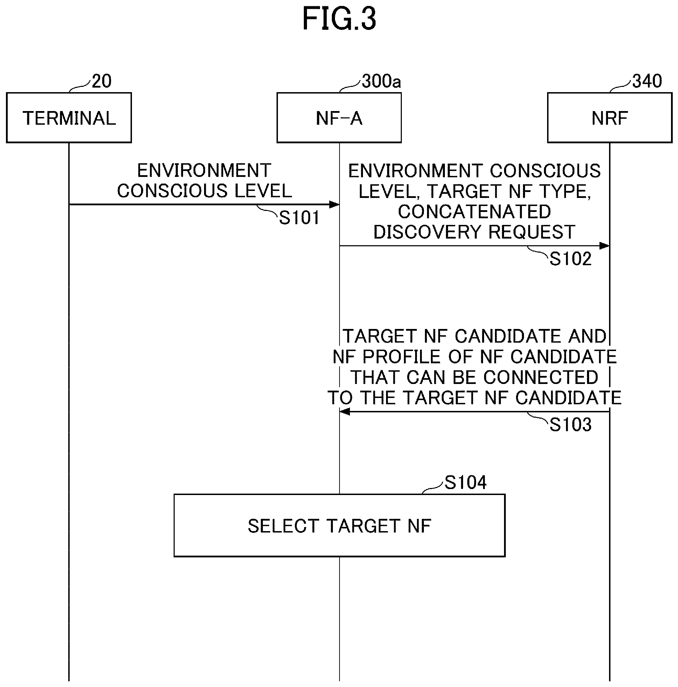

Fig. 3 is a sequence diagram illustrating an example of a flow of an NF selection procedure related to an embodiment of the present invention. Here, an NF-A 300a is an NF that selects the destination NF.

The NF-A 300a obtains the environment conscious level from the terminal 20 (step S101). It is to be noted that the terminal 20 is an example of the environment conscious level obtaining source. The NF-A 300a may obtain the environment conscious level from the AF 390 or from subscriber information.

In order to discover the destination NF (referred to as NF-Bx), the NF-A 300a transmits an indication of the environment conscious level (for example, high), the target NF type (for example, NF-B), and the concatenated discovery request (for example, NF-C) to the NRF 340 (step S102). The indication is an example of a request for transmitting information for discovering a network node that provides a service. It is to be noted that the following NF selection procedure may be described based on a premise of the environment conscious level being "high", and the NF selection procedure may be the same process as the conventional process in a case where the environment conscious level is "middle" or "low".

The NRF 340 transmits an NF profile related to the following NFs (an example of a candidate network node that provides a service) back to the NF-A 300a (step S103).
- Ones of target NFs (NF-B) that have a low energy consumption rate, have a non-excessive NF load, and are not in the energy saving state (for example, NF-B1 and NF-B2)
- Ones of next NFs (referred to as NF-Cy) capable of being connected to the NFs (for example, NF-B1 and NF-B2) that have a low energy consumption rate, have a non-excessive NF load, and are not in the energy saving state (for example, NF-C1 and NF-C2)

It is to be noted the reason why the NF load is taken into account is that, in a case where the NF load is high, the number of pending tasks increases and energy is consumed for buffer management, I/O processing, and the like. NF-Cy is an example of a next candidate network node that next provides a service with respect to the candidate network node that provides the service.

Next, the NF-A 300a selects the target NF (for example, NF-B1) based on the received NF profile. Here, the NF-A 300a may select the target NF such that the total energy consumption of all the NFs involved in the service provision is minimized at least locally.

Here, the calculation method of the energy consumption amount will be described. The following energy is required for processing a general communication service.

The total energy consumption amount = fixed energy consumption amount (for example, energy consumption of the UDM 320) + selectable energy consumption amount.

Here, the selectable energy consumption amount = NF energy consumption amount of the C-Plane function group + NF and TN energy consumption amount of the U-Plane function

Here, the NF energy consumption amount of the C-Plane function group = Σₛᵤₘₘₐₜᵢₒₙ of expressions for NFX on the path (for example, AMF 310 and SMF 370) ECNFX [joules/message] × the number of messages required for processing

The NF and TN energy consumption amount of the U-Plane function = Σ_{summation of} expressions for NFX on the path (for example, UPF or TN) EC_{NFX} [joules/message] × the data rate [bits/second] × communication period [seconds]

In addition, processing of the user container rental service requires the following energy.

The total energy consumption amount = fixed energy consumption amount (for example, energy consumption of the UDM 320) + selectable energy consumption amount

Here, the selectable energy consumption amount = NF energy consumption amount of the C-Plane function group + UCRF energy consumption amount

Here, the NF energy consumption amount of the C-Plane function group = Σₛᵤₘₘₐₜᵢₒₙ of expressions for NFX on the path (for example, AMF 310 and CRMF 371) ECNFX [joules/message] × the number of messages required for processing

The UCRF energy consumption amount = EC_{UCRF} [joules/floating-point arithmetic] × computing rate [floating-point arithmetic/second] × computing period [seconds]

Next, an operation of reflecting the energy consumption amount onto the billing information will be described. The reduction of energy consumption can be motivated by reflecting the total energy required for service provision onto the subscriber itemized statement by using the billing information.

The following is defined in the billing information as a premise of describing the operation.
- Energy consumption amount report [joules]

In addition, the following is defined in the subscriber itemized statement.
- Energy consumption amount [joules]
- Reference standard energy consumption amount [joules]

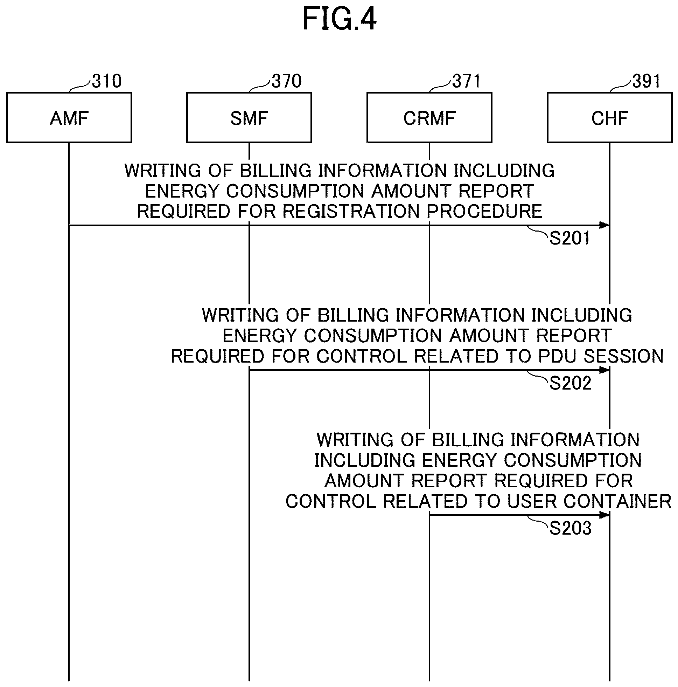

Fig. 4 is a sequence diagram illustrating an example of a flow of a billing information writing procedure related to an embodiment of the present invention. The AMF 310 performs writing of billing information including the energy consumption amount report required for the registration procedure onto the CHF 391 at the end of the terminal registration or at specified time intervals (step S201).

In addition, the SMF 370 performs writing of billing information including the energy consumption amount report required for control related to the PDU session onto the CHF 391 at the time of PDU session release or at specified time intervals (step S202). It is to be noted that the SMF 370 may perform writing of billing information for each service data flow, and may include the energy consumption report at that time.

The CRMF 371 performs writing of billing information including the energy consumption amount report required for control related to the user container onto the CHF 391 at the time of user container release or at specified time intervals (step S203).

It is to be noted that the number of messages, the number of bits, and the like, may be included in the energy consumption amount report in each of the above-described steps. According to the above-described operation, information that is necessary for calculating the reference standard energy consumption amount described below can be included in the energy consumption amount report.

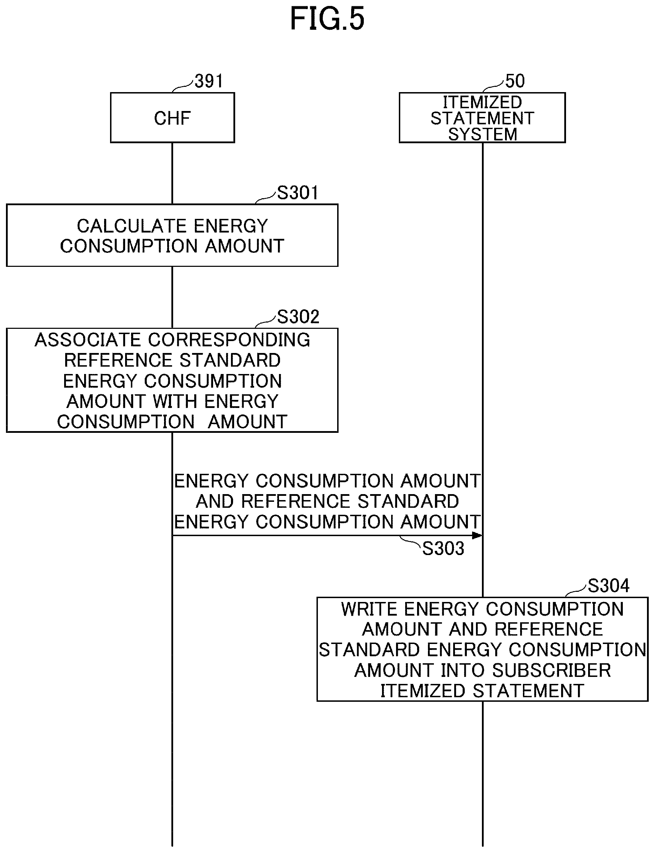

Fig. 5 is a sequence diagram illustrating an example of a flow of a subscriber itemized statement generation procedure related to an embodiment of the present invention. The CHF 391 calculates the energy consumption amount [joules] by adding the fixed energy consumption amount, or the like, that has been obtained from OAM, to the energy consumption amount reports received from the AMF 310, the SMF 370, the CRMF 371, and the like (step S301). It is to be noted that a value obtained by dividing the energy amount used for the UDM each day by the number of subscribers may be registered from OAM to the CHF 391 as the fixed energy consumption amount.

Subsequently, the CHF 391 associates the fixed energy consumption amount [joules] that has been obtained from OAM with the energy consumption amount (step S302). It is to be noted that, in a case where the number of messages, the number of bits, and the like, are included in the energy consumption amount in each step illustrated in the above-described Fig. 4, a value corresponding to the number of messages, the number of bits, and the like, may be used as the reference standard energy consumption amount [joules].

Subsequently, the CHF 391 transmits data indicating the energy consumption amount and the reference standard energy consumption amount to the itemized statement system 50 (step S303).

The itemized statement system 50 writes the energy consumption amount and the reference standard energy consumption amount included in the received data onto the subscriber itemized statement (step S304).

### (Modified embodiments)

In addition, a modified embodiment will be described in which a procedure of a newly introduced NF collecting the energy consumption amounts is used instead of the procedure of billing information writing illustrated in Fig. 4.

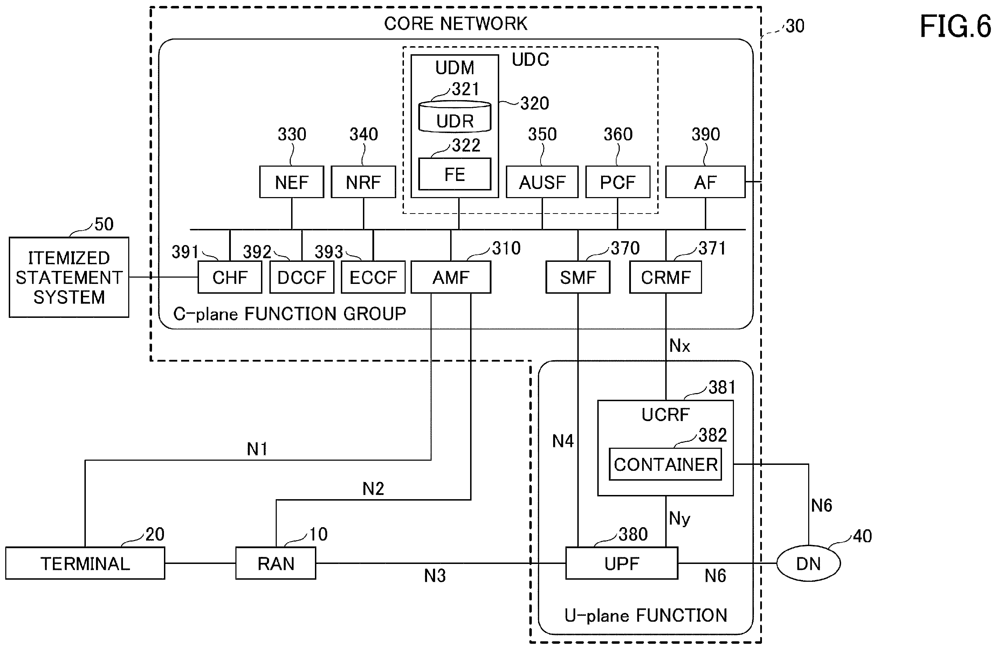

Fig. 6 is a drawing illustrating a configuration example of a wireless communication system related to a modified embodiment of the present invention. The wireless communication system related to the modified embodiment further includes a newly introduced ECCF (Energy Consumption Collection Function) 393 as a function of the C-Plane function group. The ECCF 393 is a network node that collects the energy consumption amount from each NF to generate billing information and transmits the billing information to the CHF 391. The ECCF 393 may be a new NF or may be one function of the conventional NFs (for example, the DCCF 392).

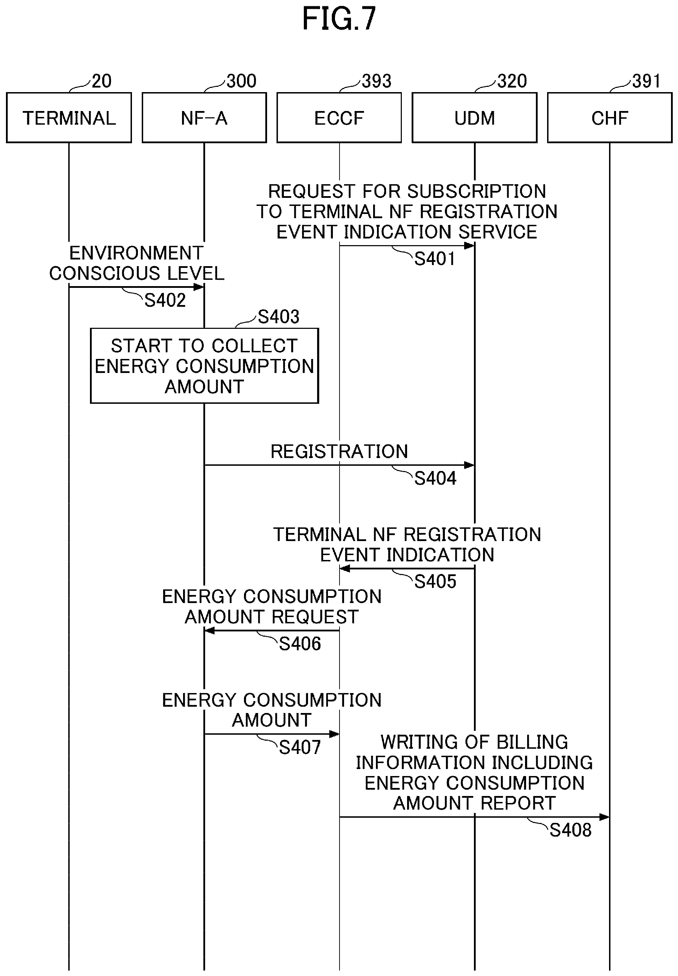

Fig. 7 is a sequence diagram illustrating an example of a flow of a billing information writing procedure related to a modified embodiment of the present invention. The ECCF 393 transmits a request for subscription to the terminal NF registration event (for example, AMF registration event, SMF registration event, or the like) indication service to the UDM 320 (step S401).

When the NF-A 300a (for example, the AMF 310, the SMF 370, or the like) receives information indicating the environment conscious level (step S402), the NF-A 300a starts to collect the energy consumption amount (step S403).

The NF-A 300a performs registration to the UDM 320 (step S404). The UDM 320 transmits an indication to the ECCF 393 that has subscribed to the terminal NF registration event indication service (step S405).

The ECCF 393 transmits an energy consumption amount collection request to the NF-A 300a (step S406). The NF-A 300a transmits data indicating the energy consumption amount to the ECCF 393 (step S407). Here, the number of messages, the number of bits, and the like, may be included in the transmitted data indicating the energy consumption amount. According to the above-described operation, information that is necessary for calculating the reference standard energy consumption amount described above can be included in the energy consumption amount report.

The ECCF 393 appropriately puts together the received energy consumption amount values and performs writing of billing information including the energy consumption amount to the CHF 391 (step S408).

According to an embodiment of the present invention, appropriate NF selection can be performed by taking into account the NF energy consumption, NF load, energy saving state, and the like. In addition, the NF selection aiming at the overall optimization with respect to the energy consumption can be achieved by performing the destination NF selection by taking into account the NFs that can be selected by the destination NF. Furthermore, the reduction of energy consumption can be motivated by reflecting the energy required for service provision onto the subscriber itemized statement by using the billing information.

### (Device configuration)

Next, a functional configuration example of the base station 10, the terminal 20, and various types of network nodes that perform processes and operations described above will be described. The base station 10, the terminal 20, and various types of network nodes include functions for implementing the embodiments described above. It is to be noted, however, that each of the base station 10, the terminal 20, and various types of network nodes may include only some of the functions in the embodiments.

### <Base station 10 and network node>

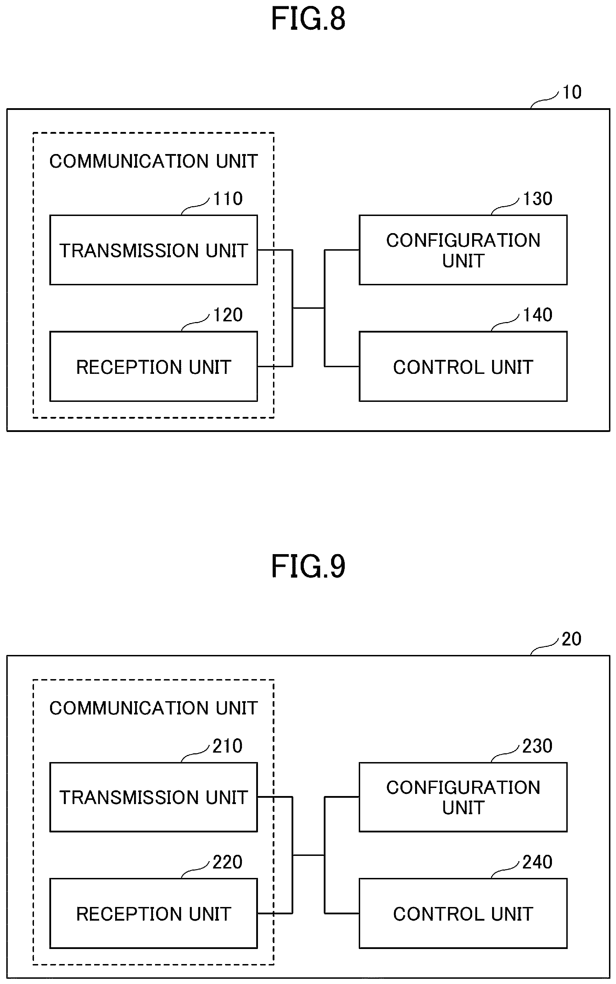

Fig. 8 is a diagram illustrating an example of a functional configuration of the base station 10. As shown in Fig. 8, the base station 10 includes a transmission unit 110, a reception unit 120, a configuration unit 130, and a control unit 140. The functional configuration illustrated in Fig. 8 is merely an example. Functional divisions and names of functional units may be anything as long as operations according to an embodiment of the present invention can be performed. It is to be noted that network nodes may have a similar functional configuration as the base station 10. In addition, the network nodes having a plurality of different functions in the system architecture may be composed of a plurality of network nodes separated for each function.

The transmission unit 110 includes a function for generating a signal to be transmitted to the terminal 20 or to another network node and transmitting the signal in a wired manner or wireless manner. The reception unit 120 includes a function for receiving various types of signals transmitted from the terminal 20 or another network node, and obtaining, for example, information of an upper layer from the received signals.

The configuration unit 130 stores preset configuration information and various configuration information items to be transmitted to the terminal 20 in a storage apparatus and reads the preset configuration information from the storage apparatus as necessary. Contents of the configuration information are, for example, configurations related to communications using the NTN.

The control unit 140 performs processing related to communications using the NTN as described in the embodiments. Further, the control unit 140 performs a process related to communications with the terminal 20. Further, the control unit 140 performs a process related to geographical location verification of the terminal 20. The functional units related to signal transmission in the control unit 140 may be included in the transmission unit 110, and the functional units related to signal reception in the control unit 140 may be included in the reception unit 120.

### <Terminal 20>

Fig. 9 is a diagram illustrating an example of a functional configuration of the terminal 20. As shown in Fig. 9, the terminal 20 includes a transmission unit 210, a reception unit 220, a configuration unit 230, and a control unit 240. The functional configuration illustrated in Fig. 9 is merely an example. Functional divisions and names of functional units may be anything as long as operations according to an embodiment of the present invention can be performed. Similar to the terminal 20, the USIM that is attached to the terminal 20 may include a transmission unit 210, a reception unit 220, a configuration unit 230, and a control unit 240.

The transmission unit 210 generates a transmission signal from transmission data and transmits the transmission signal wirelessly. The reception unit 220 receives various signals wirelessly and obtains upper layer signals from the received physical layer signals. Furthermore, the reception unit 220 has a function of receiving NR-PSS, NR-SSS, NR-PBCH, DL/UL control signals, or reference signals transmitted from the network node.

The configuration unit 230 stores various types of configuration information received from the network node via the reception unit 220 in the storage device and reads the configuration information from the storage device depending on the necessity. In addition, the configuration unit 230 also stores pre-configured configuration information.

The network node in an embodiment of the present invention may be configured to be a network node as described in each item below. In addition, a communication method below may be performed.

### <Configuration related to an embodiment of the present invention>

### (First item)

A network node including:
a reception unit configured to receive a request for transmitting information for discovering a network node that provides a service from another network node; and
a transmission unit configured to transmit, to the another network node, information indicating a candidate network node that provides the service based on an energy consumption rate, an energy saving state, or a load of each of network nodes.

### (Second item)

The network node as described in the first item, wherein
the transmission unit transmits, to the another network node, information indicating a network node that has a low energy consumption rate and a non-excessive load and that is not in an energy saving state as the candidate network node that provides the service.

### (Third item)

The network node as described in the first item or the second item, wherein
the transmission unit transmits, to the another network node, information indicating a next candidate network node that next provides a service with respect to the candidate network node that provides the service based on the energy saving state, the load, or an environment conscious level.

### (Fourth item)

A communication method performed by a network node, the communication method including:
receiving a request for transmitting information for discovering a network node that provides a service from another network node; and
transmitting, to the another network node, information indicating a candidate network node that provides the service based on an energy consumption rate, an energy saving state, or a load of each of network nodes.

According to any one of the above-described configurations, a technology is provided that enables to achieve an appropriate NF selection by taking into account the energy consumption. According to the first item, information indicating a candidate network node that provides the service can be transmitted to another network node based on the energy consumption rate, the energy saving state, or the load of each of network nodes. According to the second item, information indicating a network node that has a low energy consumption rate and a non-excessive load and that is not in an energy saving state as the information indicating the candidate network node that provides the service can be transmitted to another network node. According to the third item, the information indicating a next candidate network node that next provides a service with respect to the candidate network node that provides the service can be transmitted to another network node based on the energy saving state, the load, or the environment conscious level.

### (Hardware structure)

The block diagrams that have been used to describe the above embodiments (Fig. 8 and Fig. 9) show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

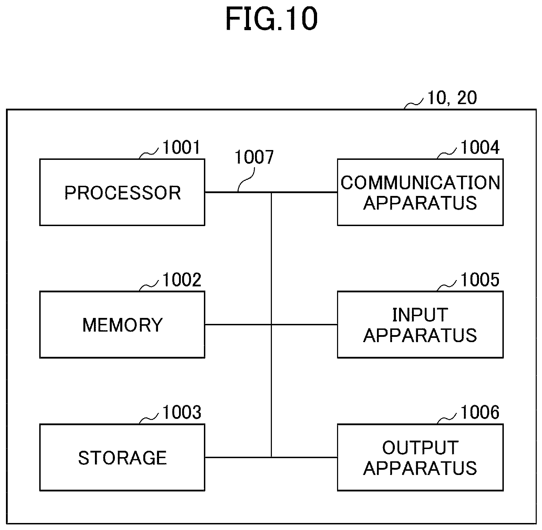

For example, a network node, a terminal 20, and so on according to one embodiment of the present disclosure may function as a computer that executes the processes of the radio communication method of the present disclosure. Fig. 10 is a diagram to show an example of a hardware structure of the base station 10 and the terminal 20 according to one embodiment. The network node may have a similar hardware configuration as the base station 10. USIM may have a similar hardware structure as the terminal 20. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 8 may be implemented by control programs that are stored in the memory 1002 and that operate on the processor 1001. In addition, for example, the control unit 240 of the terminal 20 illustrated in Fig. 9 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

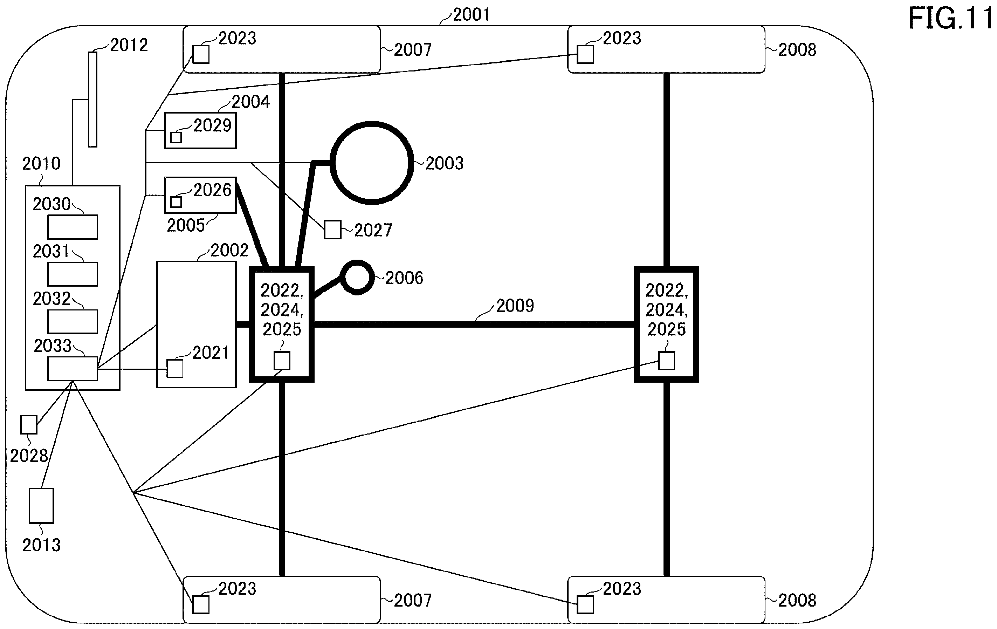

Fig. 11 shows an example of a configuration of a vehicle 2001. As shown in Fig. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2029 described above input to the electronic control unit 2010 , information obtained based on the signals, and information based on an input from the outside (a user) obtained via the information service unit 2012, to the external apparatus via radio communication. The electronic control unit 2010, the various sensors 2021 to 2029, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)).

In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a Transmission Time Interval, "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. ATTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a terminal 20.

At least one of configured BWPs may be active, and a terminal 20 may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station (RAN)
110 Transmission unit
120 Reception unit
130 Configuration unit
140 Control unit
20 Terminal
30 Core network
40 DN
50 Itemized statement system
210 Transmission unit
220 Reception unit
230 Configuration unit
240 Control unit
310 AMF
320 UDM
330 NEF
340 NRF
350 AUSF
360 PCF
370 SMF
380 UPF
390 AF
391 CHF
392 DCCF
393 ECCF
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A network node (340; 10) comprising:
a reception unit (120) configured to receive, from another network node (300a), a request for transmitting information for discovering a network node that provides a service; and
a transmission unit (110) configured to transmit, to the another network node, information indicating a network node that has a low energy consumption rate and a non-excessive load and that is not in an energy saving state as a candidate network node that provides the service.

2. The network node (340; 10) as claimed in claim 1, wherein
the transmission unit (110) is configured to transmit, to the another network node (300a), information indicating a next candidate network node that next provides a service with respect to the candidate network node that provides the service based on the energy saving state, the load, or an environment conscious level.

3. A communication system comprising the network node (340; 10) as claimed in claim 1 or 2, a terminal (20) and the another network node (300a).

4. A communication method performed by a network node (340; 10), the communication method comprising:
receiving (S102), from another network node (300a), a request for transmitting information for discovering a network node that provides a service; and
transmitting (S103), to the another network node, information indicating a network node that has a low energy consumption rate and a non-excessive load and that is not in an energy saving state as a candidate network node that provides the service.

## Patentansprüche

1. Netzwerkknoten (340; 10), umfassend:
eine Empfangseinheit (120), die konfiguriert ist, von einem anderen Netzwerkknoten (300a) eine Anforderung zur Übertragung von Informationen zum Auffinden eines Netzwerkknotens, der einen Dienst bereitstellt, zu empfangen; und
eine Übertragungseinheit (110), die konfiguriert ist, Informationen, die einen Netzwerkknoten, der eine niedrige Energieverbrauchsrate und eine nicht übermäßige Auslastung aufweist und sich nicht in einem Energiesparzustand befindet, als Kandidaten-Netzwerkknoten anzeigen, der den Dienst bereitstellt, an den anderen Netzwerkknoten zu übertragen.

2. Netzwerkknoten (340; 10) nach Anspruch 1, wobei
die Übertragungseinheit (110) konfiguriert ist, Informationen, die basierend auf dem Energiesparzustand, der Auslastung oder einem Grad des Umweltbewusstseins einen nächsten Kandidaten-Netzwerkknoten anzeigen, der in Bezug auf den Kandidaten-Netzwerkknoten, der den Dienst bereitstellt, als Nächstes einen Dienst bereitstellt, an den anderen Netzwerkknoten (300a) zu übertragen.

3. Kommunikationssystem, das den Netzwerkknoten (340; 10) nach Anspruch 1 oder 2, ein Endgerät (20) und den anderen Netzwerkknoten (300a) umfasst.

4. Kommunikationsverfahren, durchgeführt von einem Netzwerkknoten (340; 10), wobei das Kommunikationsverfahren umfasst:
Empfangen (S102) einer Anforderung zur Übertragung von Information zum Auffinden eines Netzwerkknotens, der einen Dienst bereitstellt, durch einen anderen Netzwerkknoten (300a); und
Übertragen (S103) von Informationen, die einen Netzwerkknoten, der eine niedrige Energieverbrauchsrate und eine nicht übermäßige Auslastung aufweist und sich nicht in einem Energiesparzustand befindet, als Kandidaten-Netzwerkknoten anzeigen, der den Dienst bereitstellt, an den anderen Netzwerkknoten.

## Revendications

1. Nœud (340 ; 10) de réseau comprenant :
une unité de réception (120) configurée pour recevoir, en provenance d'un autre nœud (300a) de réseau,
une demande de transmission d'informations pour découvrir un nœud de réseau qui fournit un service ; et
une unité de transmission (110) configurée pour transmettre, à l'autre nœud de réseau, des informations indiquant un nœud de réseau qui présente un faible taux de consommation d'énergie et une charge non excessive et qui n'est pas dans un état d'économie d'énergie en tant que nœud de réseau candidat qui fournit le service.

2. Nœud (340 ; 10) de réseau selon la revendication 1, dans lequel
l'unité de transmission (110) est configurée pour transmettre, à l'autre nœud (300a) de réseau, des informations indiquant un nœud de réseau candidat suivant qui fournit ensuite un service par rapport au nœud de réseau candidat qui fournit le service sur la base de l'état d'économie d'énergie, de la charge, ou d'un niveau de conscience de l'environnement.

3. Système de communication comprenant le nœud (340 ; 10) de réseau selon la revendication 1 ou la revendication 2, un terminal (20) et l'autre nœud (300a) de réseau.

4. Procédé de communication exécuté par un nœud (340 ; 10) de réseau, le procédé de communication comprenant :
la réception (S102), en provenance d'un autre nœud (300a) de réseau, d'une demande de transmission d'informations pour découvrir un nœud de réseau qui fournit un service ; et
la transmission (S103), à l'autre nœud de réseau, d'informations indiquant un nœud de réseau qui présente un faible taux de consommation d'énergie et une charge non excessive et qui n'est pas dans un état d'économie d'énergie en tant que nœud de réseau candidat qui fournit le service.
